# EUROPEAN PATENT SPECIFICATION

(11) **EP 4 211 349 B1**
(45) Date of publication and mention of the grant of the patent: **15.04.2026**
(21) Application number: 21777667.3
(22) Date of filing: 13.09.2021
(51) Int. Cl.: E02D 27/52, E02D 13/04, E02B 17/00, F03D 13/20, F03D 13/10, E02D 27/42, E02B 17/02

(54) **AN OFFSHORE WIND FARM FOUNDATION**
OFFSHORE-WINDPARKFUNDAMENT
FONDATION DE PARC ÉOLIEN EN MER

(30) Priority: 11.09.2020 BE 202005631
(43) Date of publication of application: 19.07.2023
(73) Proprietor: JAN DE NUL, 9308 Hofstade (BE)
(72) Inventor: VAN HOLEN, Ignace, 9550 ST.-LIEVENS-ESSE (BE); HEIREMANS, Carl, 9470 DENDERLEEUW (BE)
(74) Representative: Gevers Patents
(86) International application number: PCT/EP2021/075079
(87) International publication number: WO 2022/053675

(56) References cited:
- EP-A1- 2 828 435
- EP-A2- 2 310 670
- DE-A1- 10 357 392
- US-A1- 2012 243 943

## Description

### Technical field

The present invention relates to an installed offshore wind farm foundation. In the present patent application, the term offshore wind farm foundation means an offshore foundation for supporting wind farm constructions such as wind turbines, substations also referred to as transformer stations, and meteorological ocean masts. The present invention furthermore relates to an offshore wind farm foundation assembled with the kit of parts. The present invention further relates to a method using the parts of the kit of parts for installing an offshore wind farm foundation.

### Background art

Offshore wind farm foundation are known in the prior art. A particular offshore wind farm foundation has been disclosed by the patent publication CN208203477. The foundation comprises: a supporting structure comprising an upper ring defining an axial, radial and circumferential direction, the upper ring being dimensioned such as to support a support pile extending along an elongation direction between a bottom end and a top end, the supporting structure further comprising a set of feet configured to rest on a seabed, wherein the upper ring is connected with the feet such that the feet are positioned radially outward from the upper ring and axially below the upper ring and such that each foot is provided at a different position along the circumferential direction than its neighbouring feet. Providing the supporting structure enables to withstand important bending moments and lateral forces. It is however essential that the supporting structure is stably anchored to the seabed in order to withstand the important bending moment and lateral forces. Therefore an anchor pile, also referred to as a pin pile, is piled or drilled throughout every one of the feet and into the seabed, typically up to a depth of more than 10m. A problem with the foundation from CN208203477 is that the installation of the offshore wind farm foundation remains a time consuming process that requires piling or drilling multiple anchor piles into the seabed. This is particularly problematic when the seabed comprises geological obstacles such as boulders or hard rocky layers.

EP2828435 describes a kit of parts for assembling into an offshore wind farm foundation where ballast tanks are provided. However, it has been found that such ballasting is quite time consuming.

### Disclosure of the invention

It is an aim of the present invention to provide an offshore wind farm foundation wherein the problem from the prior art is solved, i.e. to provide an offshore wind farm foundation that can be installed in an easy and swift manner preferably substantially independently of the soil conditions of the seabed.

The aim is achieved according to the invention as defined in claim 1. The present invention discloses an installed offshore wind farm foundation which comprises a supporting structure comprising an upper ring defining an axial, radial and circumferential direction, the upper ring being dimensioned such as to enable the insertion of a support pile extending along an elongation direction between a bottom end and a top end throughout the upper ring upon aligning the elongation direction of the support pile with the axial direction. The supporting structure further comprises a set of feet configured to rest on a seabed, for example a prepared seabed for example excavated and filled with granular material such as gravel stones. The upper ring is connected with the feet such that the feet are positioned radially outward from the upper ring and axially below the upper ring and such that each foot is provided at a different position along the circumferential direction than its neighbouring feet. The supporting structure further comprises a lower ring positioned axially below the upper ring. Preferably, the axial centroid axis of the lower ring i.e. the axis extending in the axial direction through the centroid of the ring, is collinear with the axial centroid axis of the upper ring. The lower ring is connected with the feet such that the feet are positioned radially outward from the lower ring. Wherein pre-formed ballasts, referred to as basis ballasts, are placed on top of the supporting structure at a predetermined attachment location, wherein further pre-formed ballasts, referred to as add-on ballasts, are placed on top of the basis ballasts. The gravity of the pre-formed ballasts thus stabilize the supporting structure, and consequently the support pile, onto the seabed, by countering the important bending moments applied on the support pile and by resisting movement due to the lateral forces from waves and currents. By providing the ballasts, there is no need for a complex and time consuming piling or drilling of anchor piles into the seabed. This is particularly advantageous when the seabed comprises geological obstacles such as boulders or hard rocky layers. The present invention thus provides a kit of parts that enables to easily and rapidly install an offshore wind farm foundation substantially independent of the soil conditions of the seabed.

The present invention has further advantages with respect to the above mentioned prior art. The present invention has the advantage that it is a kit of parts comprising multiple modular components, i.e. separate components that can be assembled at the location of the prepared seabed. The present invention can be referred to as a modular gravity based support pile foundation, wherein the multiple ballasts, the supporting structure, and the support pile are separate components thereby enabling a compact transportation i.e. shipping of these components. This for example enables to use a much wider range of vessels, in particular smaller vessels. Furthermore, because the separate components are light and can be handled separately, a lighter vessel i.e. with lesser requirements on their lifting capabilities, can be used. The vessel can for example have lifting capabilities, such as cranes, limited to a lifting capacity of 4000 tons, 2000 tons or even 1000 tons. The lifting capabilities of the vessel is preferably determined by the heaviest separate component i.e. the supporting structure itself. In particular, there is no need to provide different types of vessels, i.e. having different sizes and loading capabilities during the installation of the offshore wind farm foundation onto the prepared seabed. There is for example no need for different vessels for positioning and ballasting. This drastically reduces the risks involved with approaching and mooring a vessel close by prior installed foundations. In particular, the present kit of parts allows to install a wind farm construction such as a wind turbine, a substation or a meteorological mast using merely three ships, i.e. a first vessel for preparing the seabed, a second vessel for installing the offshore wind farm foundation and a third vessel for installing the wind farm construction itself such as for example the wind turbine generator itself, onto the offshore wind farm foundation.

The present invention has the further advantage, in particular in comparison to conventional gravity based foundations, that, by providing pre-formed ballasts, there is also no need for time consuming in-situ ballasting for example in situ replacing the water in a sunken float tank with ballasting material.

More recently, offshore wind farm foundations have been installed in deep sea applications i.e. in water depths of over 40m or 50m. At such depths, the forces exerted onto the support pile, in particular due to the distributed force of currents and wave action, in addition to those from the wind farm construction such as the wind turbine itself, are high. Furthermore, at such depths, the distance from the forces to the fulcrum point (also referred to as rotation point) is long. This results in an important bending moment being applied to the support pile. Furthermore, in the recent years a trend can be seen that wind farm constructions such as wind turbines are increasing in size, thereby increasing the loads on the support pile. The size of offshore wind turbines for example doubled or tripled in the last decade. In general, offshore wind farm foundations need to withstand great amounts of loads such as important bending moments and lateral forces being applied to the support pile. The present invention has the advantage that the free standing length of the support pile is limited and thus that these important bending moments are transferred early to the supporting structure. This is not the case in conventional monopile foundation where the load is carried solely by the monopile into the seabed. This requires that monopiles have high wall thicknesses, great diameters and deep insertion depths into the seabed. The supporting structure in the present invention allows to limit the wall thickness and diameter of the support pile, for example in comparison to conventional monopile foundations. This limits the size and weight of the support pile, thereby enabling the use of a much wider range of vessels as described above. A smaller diameter support pile furthermore reduces the water drag and wave impact on the support pile. Reducing the wall thickness and diameter of the support pile also has the further advantage that the support pile can be made out of a single piece, for example having means at its top end for receiving the wind farm construction such as the wind turbine, the substation or the meteorological mast, as opposed to having means at its top end for receiving a transition piece which has means for receiving the wind farm construction. Providing the support pile as a single piece has the advantage that the support pile does not comprise weak links such as joints between an upper part (typically a transition piece) and a lower part (typically a monopile). It furthermore has the advantage that such joints do not have to be created, because the creation of such joints is a complex and time consuming process.

The present invention has the further advantage, in particular in comparison to conventional monopile foundations, that there is no need for piling or drilling a monopile into the seabed. This not only makes the installation substantially independent of soil conditions of the seabed, simpler and faster, but also enables to provide secondary steel and/or sacrificial anodes on the support pile even before the placement of the support pile in the supporting structure. Preferably the lower ring is configured to support the bottom end of the support pile Alternatively, the bottom end of the support pile rests on the seabed, i.e. is supported by the seabed, i.e. without drilling or piling the support pile into the seabed. Possibly, the bottom of the support pile resting on the seabed, sinks into the seabed due the weight of the support pile. The support pile however at most penetrates, due to the sinking, 5 meter, for example 1 meter into the seabed. It is a further advantage that the support pile is shorter than the monopile, because the monopile comprises a substantial part of its length that is positioned below the seabed. This has the advantages described above, e.g. that the support pile can be made out of a single piece, and that the diameter and the wall thickness can be adapted as to the circumstances at the placement location for example the water depth, the wave/current loads, the wind loads etc.

The present invention has the further advantage that, because the support pile is anchored at two positions, i.e. at the upper ring and at the lower ring, the free standing length of the support pile is reduced and thus that the important bending moments and lateral forces are transferred earlier to the supporting structure.

The present invention has the further advantage that, because the lower ring has an axially extending bore hole, also referred to as a recess, the risk of rocking is substantially reduced i.e. even if an elevation of the seabed would be present under opening of the borehole of the lower ring, it would not cause an instability in the positioning of the supporting structure.

The present invention has the further advantage, in particular in comparison to conventional gravity based foundations, that while grouping the individual foundations inside a single windfarm in families, every offshore wind farm foundation on itself can be provided with a tailored amount of pre-formed ballasts, i.e. sufficient to prevent drifting and overturning of the offshore wind farm foundation within a predetermined safety margin. Whereas the support structures can be more uniformly line fabricated, the adaption to the specific individual location of each foundation can be in the size or number of ballasts and the length of the support pile.

According to an embodiment of the present invention, the pre-formed ballasts are pre-casted concrete blocks.

According to an embodiment of the present invention, each separate pre-formed ballast has a mass which is lower than the mass of the supporting structure. This has the advantage that the lifting capabilities of the vessel will be solely determined by the mass of the supporting structure, and that the same vessel can be used to place the pre-formed ballasts. The supporting structure preferably has a mass bigger than 800 tons, preferably bigger than 1000 tons. The supporting structure preferably has a mass smaller than 5000 tons, preferably smaller than 2000 tons. The mass of each separate pre-formed ballast is preferably bigger than 100 tons, preferably bigger than 500 tons.

According to an embodiment of the present invention, the pre-formed ballasts have coupling means for coupling the ballast to the attachment location of the supporting structure. The coupling means of the pre-formed ballasts is for example a groove. The attachment location of the supporting structure for example comprises a protrusion, wherein the groove and the protrusion interlock such as to couple the pre-formed ballast to the attachment location. The interlocking between the groove and the protrusion for example forms a shear key connection. The coupling means of the ballasts preferably comprises a cut-out in each ballast, for example forming the groove as described above, wherein the cut-out preferably has a complementary shape to the shape of the supporting structure at the attachment location, for example forming the protrusion as described above. This provides a stable connection between the pre-formed ballasts and the supporting structure. Preferably, the attachment location of the supporting structure are the feet of the supporting structure, for example the top surface of the feet of the supporting structure, i.e. the pre-formed ballasts are to be positioned on top of at least a part of the top surface of the feet. This provides an optimal location to hold down the supporting structure against the important bending moment exerted on the supporting structure, because the feet are positioned radially outward from the upper and lower rings. The cut-out thus preferably has a complementary shape to the shape of the foot for example of the top surface of the foot. Neighbouring feet are preferably interconnected by a single pre-formed ballast. Each pre-formed ballast thus preferably comprises two cut-outs, in particular one cut-out at each of its opposing ends.

The pre-formed ballasts as described above are also referred to as the basis ballasts. The basis-ballasts preferably comprise further coupling means, in particular a protrusion, preferably a protrusion at each of its opposing ends i.e. on top of the cut-outs. The protrusion for example has a similar shape as the protrusion provided on the attachment location as described above. The further coupling means of the basis-ballasts are configured for coupling with further pre-formed ballasts, referred to as add-on ballasts, configured to be placed on top of the basis ballasts. The kit of parts comprises the add-on ballasts. The add-on ballasts preferably comprise coupling means, in particular a groove, complementary to the further coupling means of the basis ballasts enabling the coupling of the add-on ballast and the basis ballast. The add-on ballasts preferably comprise further coupling means, in particular a protrusion, for coupling with further add-on ballasts for example to form a second ring of add-on ballasts. Preferably, the add-on ballasts and the basis ballasts have the same shape and are preferably made of the same material. Preferably, the cut-out in the basis ballast is the groove of the add-on ballast. Preferably, the further coupling means of the basis ballast is the further coupling means of the add-on ballast.

According to an embodiment of the present invention, the pre-formed ballasts have the shape of a beam. According to an embodiment of the invention, the pre-formed ballasts have the shape of curved beams. This preferably enables the pre-formed ballasts to be assembled in a circular ring shape. According to an embodiment of the invention, each pre-formed ballast spans over an arc substantially equal to 360° divided by the number of feet of the supporting structure. According to an alternative embodiment of the present invention, the pre-formed ballast have the shape of a straight beam.

According to an embodiment of the invention, neighbouring feet define an angle along the axial direction, wherein the angles of every neighbouring feet are equal. A supporting structure having three feet for example has an angle of 120° between every neighbouring feet.

According to an embodiment of the present invention, the number of feet is even. According to an embodiment of the present invention, the number of feet is at least three, preferably between three and ten, preferably six. At least three feet enable to resist the important bending moment and lateral forces independent of the direction of the force exerted on the support pile.

According to an embodiment of the present invention, the upper ring is a metallic ring. According to an embodiment of the present invention, the upper ring comprises chamfered guiding spikes on its upper rim configured to guide the bottom end of the support pile into the borehole of the upper ring.

According to an embodiment of the present invention the upper ring is connected to the feet by a first set of struts. Struts are also referred to as rods. Providing struts with openings between the neighbouring struts,, instead of a continuous cone, enables to make the supporting structure lighter, and thus easier to transport. Furthermore, it enables to make the supporting structure work more optimal, because the uplifting forces and gravity forces countering the uplifting forces come together in almost the same point. Furthermore, the transparency of the structure has the advantage that less water drag is exerted. Preferably, the number of struts in the first set of struts equals the number of feet in the supporting structure. Preferably each foot is connected to the upper ring by one strut of the first set of struts. Preferably, each strut in the first set of struts extends in the radial and axial direction i.e. the vector described by the strut has a non-zero axial component and a non-zero radial component. The struts in particular extend in a rectilinear manner. Preferably, the axial length of the struts is such that the upper ring is positioned under water, for example at lowest astronomical tide (LAT). Preferably, the axial length of the struts is such that the upper ring is positioned at substantially half of the sea depth at low astronomical tide, for example within a deviation of 30%, preferably 20%. The ratio of the axial length to the radial length of the first strut is preferably between 0.5 and 1.5, preferably approximately equal to 1. Preferably, the struts of the first set of struts extend perpendicularly to the circumferential direction. Preferably the struts of the first set of struts are metallic struts, preferably hollow metallic struts. The struts are for example shaped as I-beams or as cylindrical tubes.

According to an embodiment of the present invention, the lower ring comprises a primary ring and a pile support, i.e. an element flanging radially inward of the borehole of the primary ring. The pile support for example flanges radially inward over a distance of at least one times, preferably at least five times, preferably at least ten times the wall thickness of the bottom end of the support pile. The primary ring is dimensioned such as to enable the insertion of the support pile through the primary ring up to abutment of the bottom end of the support pile with the pile support upon aligning the elongation direction of the support pile with the axial direction.

According to an embodiment of the present invention, the lower ring comprises a metallic ring. Preferably, the metallic ring is the primary ring of the lower ring. Preferably the lower ring comprises a pre-casted concrete ring, for example of reinforced concrete, surrounding the primary ring. Preferably, the pre-casted concrete ring furthermore extends below the primary ring and forms the pile support.

According to an embodiment of the present invention the feet, in particular the bottom surface of the feet, are positioned coplanair with the lower rim of the lower ring. This makes sure that the lower ring is supported by the seabed. This ensures that the vertical loads are optimally transferred from the supporting structure to the seabed.

According to an embodiment of the present invention, the lower ring is connected to the feet by a second set of struts. Providing struts with openings between the neighbouring struts, instead of a disc, enables to make the supporting structure lighter, and thus easier to transport. It furthermore avoids rocking of the supporting structure even if an elevation of the seabed would be present between the struts. Preferably, the number of struts in the second set of struts equals the number of feet in the supporting structure. Preferably each foot is connected to the lower ring by one strut of the second set of struts. The struts in particular extend in a rectilinear manner. Preferably, each strut of the second set of struts extends in the radial direction. Preferably, each strut of the second set of struts extend perpendicularly to the axial direction. Preferably each strut of the second set of struts extend perpendicularly to the circumferential direction. Preferably, each strut of the second set of struts are pre-casted concrete struts, preferably pre-casted reinforced concrete struts. Preferably the lower ring comprises the above mentioned pre-casted concrete ring surrounding the primary ring, wherein the pre-casted concrete ring is monolithical with the pre-casted concrete struts of the second set of struts. According to an embodiment, the feet are pre-casted concrete feet. Preferably the pre-casted concrete feed are monolithical with the struts of the second set of struts. Providing the feet and/or the struts of the second set of struts and/or the ring surrounding the lower ring as pre-cast concrete structure enables to increase the efficient use of the weight of the supporting structure whilst limiting the size of the supporting structure. The pre-cast concrete parts preferably make out between 60% and 90%, preferably at least 80% of the mass of the supporting structure.

According to an embodiment of the present invention, the upper ring and the lower ring together form a single axially extended ring of which the upper ring and the lower ring are respectively the top and bottom part, for example the top 50cm and the lower 50cm. Alternatively, the upper ring is connected to the lower ring by a third set of struts. The openings between the neighbouring struts, has the advantage that less water drag is exerted on the supporting structure and that a lighter supporting structure is obtained. In particular, the struts of the third set of struts are rectilinear struts, preferably extended primarily in the axial direction. The struts of the third set of struts preferably also extend in a direction perpendicular to the axial direction and the radial direction. This enables to optimally counter torsion moments applied to the upper and/or lower rings. Preferably, adjacent struts in the third set of struts extend in opposite directions along the direction perpendicular to the axial direction and radial direction. This enables to optimally counter torsion moments applied to the upper and/or lower rings in any direction. The struts of the third set of struts preferably are directly connected to the lower ring or to the pre-casted concrete ring surrounding the lower ring. The struts of the third set of struts preferably are directly connected to the upper ring or to a portion of the struts of the first set of struts adjacent to the upper ring. According to an alternative embodiment of the present invention, the upper ring is merely connected to the lower ring via the first set of rods, the feet and the second set of rods, i.e. prior to the insertion of the support pile there is no direct axial connection between the upper and lower ring.

According to an embodiment of the present invention, the kit of parts further comprises first connection means for interconnecting the upper ring with the support pile extending throughout the upper ring. According to an embodiment of the present invention, the kit of-parts further comprises second connection means for interconnecting the lower ring with the support pile extending through the lower ring. According to an embodiment of the present invention, the first and/or second connection means are formed by grouting the space between the support pile and respectively the upper and/or lower ring.

According to an embodiment of the present invention, the kit of parts further comprises the support pile. The support pile preferably has a length at least equal to the water depth at high astronomical tide at the placement location. Preferably, the top end of the support pile is configured to receive a wind farm construction such as a wind turbine, a substation or a meteorological mast i.e. as opposed to the top end of the support pile being configured to receive a transition piece configured to receive the wind farm construction. Preferably the entire support pile is made out of a single piece having the advantages as described above. Preferably the mass of the support pile is less than the mass of the supporting structure having the advantages as described above. According to an embodiment of the present invention, the support pile, in particular at its bottom end, has a diameter of between 5m and 10m, preferably between 6m and 8m. The diameter of the support pile can be adapted to the circumstances at the placement location for example the water depth, the wave/current loads, the wind loads etc. Preferably the support pile has a substantially cylindrical shape i.e. having a substantially constant diameter over its length. Alternatively, the support pile has a changing diameter over its length.

According to an embodiment of the present invention, the kit of parts further comprises a wind farm construction for example a wind turbine, a substation or a meteorological mast. The wind turbine is for example a 6-8 MW or 10-15 MW or larger turbine.

It is a further aim of the present invention to provide for an installed offshore wind farm foundation comprising the components of the kit of parts as described above. The embodiments pertaining to the installed offshore wind farm foundation are described below.

The support pile extends throughout the upper ring, and the pre-formed ballasts are placed on top of the attachment location of the supporting structure. Preferably, the bottom end of the support pile rests on the supporting structure i.e. the bottom end of the support pile is not inserted in the seabed. Preferably, the bottom end of the support pile is supported by the lower ring of the supporting structure, for example by the pile support of the lower ring.

According to an embodiment of the present invention, at least two separate pre-formed ballasts are placed on top of the supporting structure at the attachment location.

According to an embodiment of the present invention, the attachment location of the supporting structure are the feet of the supporting structure, for example the top of the feet of the supporting structure i.e. the pre-formed ballasts are at least provided on at least a part of the top of the feet of the supporting structure. Preferably, the number of separate pre-formed ballasts is at least equal to the number of feet, preferably equal to the number of feet. This enables to provide at least one, preferably one, pre-formed ballast per foot. Additionally, add-on ballast are provided on top of the above mentioned pre-formed ballasts. Preferably, neighbouring feet are interconnected by the pre-formed ballasts, preferably by a single pre-formed ballast. The location of the pre-formed ballast point of contact with the feet has the advantage that the downward gravity forces from the pre-formed ballasts on both sides of the feet act directly at the location where the upward uplifting forces act, thus limiting bending moments in the feet and in the supporting structure as a whole. According to an embodiment of the present invention the separate pre-formed ballasts together form a ring. Providing a ring has the advantage that maximum use is made of the pre-formed ballasts capacity to counter the overturning forces with a minimum of material consumption, i.e. mass provided inside of the ring would provide less counter moment per unit of mass for countering the overturning of the offshore wind farm foundation because the distance of said mass to the fulcrum of the bending moment would be reduced. According to an embodiment, the pre-formed ballasts are curved beams, and the ring composed of these pre-formed ballasts is a circular ring. The circular ring shape has the advantage of having a low shape factor. In an alternative embodiment, the pre-formed ballasts are straight beams, and the ring composed of these pre-formed ballasts is a polygonal ring. According to an embodiment of the present invention, the add-on pre-formed ballasts provided on top of the basis pre-formed ballasts also form at least one ring, for example a circular ring or a polygonal ring. The number of rings of add-on pre-formed ballasts can be increased depending on the circumstances at the placement location, for example the water depth, the wave/current loads, the wind loads etc.

It is a further aim of the present invention to provide for an installed offshore wind farm construction such as an offshore wind turbine, substation or meteorological mast. The installed offshore wind farm construction comprises the installed offshore wind farm foundation as previously described wherein the offshore wind farm foundation supports a wind farm construction such as a wind turbine, a substation or a meteorological mast.

It is a further aim of the present invention to provide for a method for installing an offshore wind farm foundation, the method comprising the steps of
a) providing the kit of parts for assembling into the installed offshore wind farm foundation as described above, the kit of parts comprising the supporting structure, the support pile, the pre-formed ballasts
b) shipping the supporting structure towards a placement location,
c) shipping the pre-formed ballast towards the placement location,
d) shipping the support pile towards the placement location,
e) placing the supporting structure onto the seabed,
f) placing the pre-formed ballasts on top of the attachment location, preferably the feet, of the supporting structure, referred to as basis ballasts, on top of the feet of the supporting structure and placing further pre-formed ballasts, referred to as add-on ballasts, on top of the basis ballasts and
g) inserting the support pile throughout the upper ring and towards the seabed, for example up to abutment of the bottom part of the support pile with the lower ring.

Step a) of providing the kit of parts is a step that has to be fulfilled at the latest after having performed the other steps, i.e. after having installed the offshore wind farm foundation, all the parts of the kit of parts will have been provided. The method could also be described as: providing the supporting structure from the kit of parts, providing the pre-formed ballasts from the kit of parts, providing the support pile from the kit of parts, shipping the supporting structure towards a placement location, shipping the pre-formed ballast towards the placement location, shipping the support pile towards the placement location, placing the supporting structure onto the seabed, placing the pre-formed ballasts on top of the feet of the supporting structure, and inserting the support pile throughout the upper ring and towards the seabed.

According to an embodiment of the present invention, steps b), c) and d) comprises shipping using a single vessel for example in a single unified step. Preferably, the vessel is a ship.

According to an embodiment of the present invention, step g) is only performed after performing steps e) and f). This has the advantage that the support pile can be easily lowered into the already placed supporting structure, thereby alleviating temporary holding means, such as a pile gripper, for holding the placed support pile on the placement location whilst waiting for the placement of the supporting structure.

According to an embodiment of the present invention, the method comprises a step of preparing the seabed at the desired placement location, prior to performing any of the steps e), f) and g). Preferably, the step of preparing the seabed at the desired placement location comprises digging a cavity in the seabed and at least partly filling the cavity with granular material such as gravel stones. Preferably, after placing the supporting structure onto the granular material in step e), further granular material such as gravel stones - for example of a different granular size than the granular material used to fill the cavity- are added such as to cover at least a part of the feet of the supporting structure. This prevents scouring damage to the feet.

According to an embodiment of the present invention, the method comprises a step of fixing the support pile to the upper and lower ring, for example by grouting the space between on the one hand the support pile and on the other hand the upper and lower ring.

It is a further aim of the present invention to provide for a method for installing an offshore wind farm construction such as a wind turbine, a substation or a meteorological mast. The method comprising installing the offshore wind farm foundation as described above, wherein the method further comprises placing a wind farm construction such as a wind turbine, a substation or a meteorological mast on the offshore wind farm foundation.

### Figures

Figure 1 shows a perspective view of the supporting structure positioned onto the seabed.
Figure 2 shows the perspective view of the supporting structure of figure 1 wherein basis pre-formed ballast are shown with indications of how the basis pre-formed ballasts are to be positioned on top of the feet of the supporting structure and wherein add-on pre-formed ballasts are shown with indications of how the add-on pre-formed ballasts are to be positioned on top of the basis pre-formed ballasts.
Figure 3 shows a detailed view of the pre-formed ballasts shown in figure 2.
Figure 4 shows the perspective view of the supporting structure and the pre-formed ballasts of figure 2 wherein the basis pre-formed ballasts are positioned on top of the feet and wherein no add-on pre-formed ballasts are positioned on top of the basis pre-formed ballast, and wherein a support pile has been inserted in the supporting structure.
Figure 5 shows the offshore wind farm foundation of figure 4 wherein a wind turbine is supported on the offshore wind farm foundation.

### Brief description of the figures

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

The term "comprising", used in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

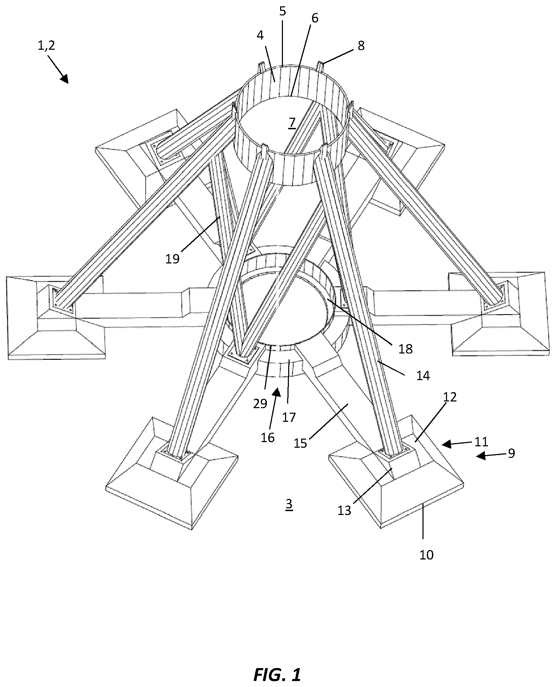

Figure 1 shows a perspective view of the supporting structure 2 positioned onto the seabed 3. The figure also shows the first step in an exemplary method for installing an offshore wind farm foundation 1 according to the present invention.

The supporting structure 2 comprises a metallic upper ring 4 defining an axial, radial and circumferential direction. The upper ring 4 is dimensioned such as to enable the insertion of a support pile extending along an elongation direction between a bottom end and a top end throughout the upper ring 4 upon aligning the elongation direction of the support pile with the axial direction. In other words, the diameter of the borehole 7 of the upper ring 4 is greater than the diameter of the support pile. The upper ring 4 comprises an upper rim 5 and a lower rim 6. On top of the upper rim 5 of the upper ring 4 multiple chamfered guiding elements 8 are provided for guiding the bottom end of the support pile through the borehole 7 of the upper ring 4.

The supporting structure 2 further comprises six feet 9 resting on a prepared seabed 3 i.e. a seabed prepared by excavating the natural seabed, wherein the excavation is filled with granular material, in particular gravel stones. To that end, the bottom 10 of the feet 9 comprise a substantially flat surface such as to optimally rest on the seabed 3. The feet 9 have a protruding shape such as to enable interlocking with the cut-outs/groove in the pre-formed ballasts as will be explained below. The protruding shape is in particular that of a truncated pyramid 11, for example having four sidewalls. On the top surface 12 of the truncated pyramid 11, i.e. the small surface provided opposed to the substantially flat bottom surface 10, a connector part 13 is provided for interconnecting the feet 9 with struts 14 of a first set of struts as will be explained below. The feet 9 are positioned at equal distances from one another, i.e. each one being separated from its neighbouring feet by 60° along the axial direction. The feet 9 are pre-casted concrete feet, and are monolithical with the pre-casted concrete struts 15 of the second set of struts as explained below.

The upper ring 4 is connected with the feet 9 such that the feet 9 are positioned radially outward from the upper ring 4 and axially below the upper ring 4. The upper ring 4 is connected to the feet 9 by a first set of struts 14. The number of struts 14 in the first set of struts equals the number of feet 9 in the supporting structure 2 i.e. six. Each foot 9 is connected to the upper ring 4 by one strut 14 of the first set of struts. Each strut 14 in the first set of struts extends in the radial and axial direction. The struts 14 in particular extend in a rectilinear manner. The struts 14 of the first set of struts extend perpendicularly to the circumferential direction i.e. the strut 14 does not extend in the direction perpendicular to the radial and axial directions. The struts 14 of the first set of struts are metallic tubes, in particular hollow metallic tubes. The struts 14 of the first set of struts are attached to the feet 9 by bolting the struts 14 to the connector part 13 of the feet 9.

The supporting structure 2 further comprises a lower ring 16 positioned axially below the upper ring 4. The axial centroid axis of the lower ring 16 i.e. the axis extending in the axial direction through the centroid i.e. the geometric midpoint, of the ring, is collinear with the axial centroid axis of the upper ring 4. The lower ring 16 comprises a primary metallic ring 29 surrounded by and attached to a pre-casted concrete ring 17, the latter being monolithical with the struts 15 of the second set of struts as described below. The lower ring 16 comprises a pile support 18 formed by the pre-casted concrete ring 17 extending below the primary ring 29, flanging radially inward of the primary ring 29. The primary ring 29 is dimensioned such as to enable the insertion of the support pile through the primary ring 29 up to abutment of the bottom end of the support pile with the pile support 18 upon aligning the elongation direction of the support pile with the axial direction.

The lower ring 16 is connected with the feet 9 such that the feet 9 are positioned radially outward from the lower ring 16. The lower ring 16 is connected to the feet 9 by a second set of struts 15. The number of struts 15 in the second set of struts equals the number of feet 9 in the supporting structure 2 , i.e. six. Each foot 9 is connected to the lower ring 16 by one strut 15 of the second set of struts. The struts 15 in particular extend in a rectilinear manner. Each strut 15 extends in the radial direction. The struts 15 of the second set of struts extend perpendicularly to the axial direction. The struts 15 of the second set of struts extend perpendicularly to the circumferential direction i.e. the strut 15 does not extend in the direction perpendicular to the radial and axial directions. The struts 15 of the second set of struts are pre pre-casted reinforced concrete struts i.e. pre-casted concrete struts reinforced with metallic elements.

The upper ring 4 is connected to the lower ring 16 by a third set of struts 19. The struts 19 of the third set of struts are rectilinear struts, extending primarily in the axial direction i.e. the struts 19 describe a vector of which the axial component is the largest component. The struts 19 of the third set of struts also extend in a direction perpendicular to the axial direction and the radial direction. Adjacent struts 19 in the third set of struts extend in opposite directions along the direction perpendicular to the axial direction and radial direction. The struts 19 of the third set of struts are directly connected to the pre-casted concrete ring 17 surrounding the lower ring 16 and to a portion of the struts 14 of the first set of struts adjacent to the upper ring 4, i.e. as opposed to being directly connected to the upper ring 4 itself.

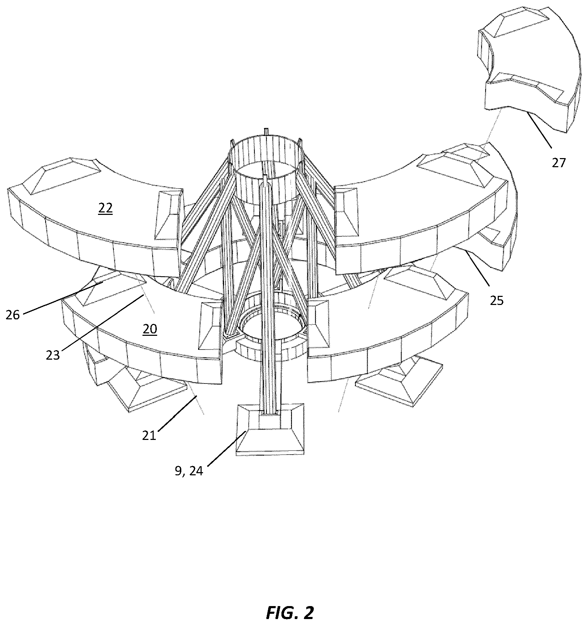

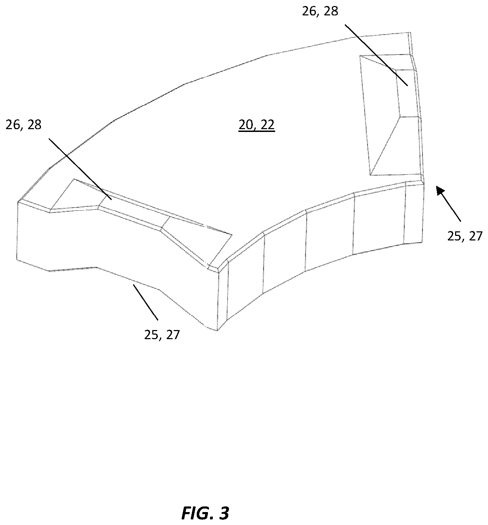

Figure 2 shows the perspective view of the supporting structure 2 shown in figure 1 wherein basis pre-formed ballast 20 are shown with indications 21 of how these basis pre-formed ballasts 20 are to be positioned on top of the feet 9 of the supporting structure 2 and wherein add-on pre-formed ballasts 22 are shown with indications 23 of how these add-on pre-formed ballasts 22 are to be positioned on top of the basis pre-formed ballasts 20. The figure also shows the second step in an exemplary method for installing an offshore wind farm foundation 1 according to the present invention. The second step follows the first step described above and comprises placing basis pre-formed ballasts 20 on the attachment location 24 of the supporting structure 2, i.e. on the feet 9, and subsequently placing add-on pre-formed ballasts 22 on top of the basis pre-formed ballasts 20. The pre-formed ballasts that are placed directly in contact with the supporting structure 2, in particular on the top surface of the foot 9, are referred to as the basis pre-formed ballasts 20. The basis pre-formed ballasts 20 have coupling means for coupling the ballast to an attachment location 24 of the supporting structure 2 i.e. a location on the supporting structure 2 on which the basis pre-formed ballasts 20 are to be placed. The coupling means of the basis ballasts 20 comprises a cut-out 25 in each ballast 20, wherein the cut-out 25 has a complementary shape to the shape of the supporting structure 2 at the attachment location 24. This provides a stable connection between the basis pre-formed ballasts 20 and the supporting structure 2. The attachment location 24 of the supporting structure 2 is the top surface of the feet 9 of the supporting structure 2, i.e. the side and top surface of the truncated pyramid 11 formed by each foot 9. The cut-out 25 thus has a complementary shape to the shape of the top of the foot 9. In particular, the cut-out 25 has the shape of half a truncated pyramid 11 having four sides. The cut-out 25 has the form of only half a truncated pyramid 11, because two basis pre-formed ballasts 20 are to be placed on each one foot 9, wherein each basis pre-formed ballast 20 rests on half of the top surface of the foot 9. Neighbouring feet 9 are interconnected by a single basis pre-formed ballast 20. Each basis pre-formed ballast 20 thus comprises two cut-outs 25, in particular one cut-out 25 at each of its opposing ends. The basis pre-formed ballasts 20 comprise further coupling means 26, in particular a protrusion, for coupling with further pre-formed ballasts 22, referred to as add-on ballasts, configured to be placed on top of the basis ballasts 20. The protrusion 26 has the shape of half a truncated pyramid having four sides such that two adjacent basis-ballasts 20 together form a protrusion having the shape of an entire truncated pyramid having four sides. Each basis-ballast 20 comprises two such protrusions 26 provided at its opposite ends, in particular provided on top of the cut-outs 25. The add-on ballasts 22 comprise coupling means, in particular a groove 27 at each of its opposite ends. The groove 27 of the add-on ballast 22 is complementary to the further coupling means 26 of the basis ballasts 20 enabling the coupling of the add-on ballast 22 and the basis ballast 20. The add-on ballasts 22 comprise further coupling means 28, in particular a protrusion, for coupling with further add-on ballasts 22 for example to form a second ring of add-on ballasts. The add-on ballasts 22 and the basis ballasts 20 have the same shape and are made of the same material. The cut-out 25 in the basis ballast 20 is the groove 27 of the add-on ballast 22 i.e. the groove 27 of the add-on ballast 22 also has the shape of half a truncated pyramid having four sides and the grooves 27 of the add-on ballast 22 are likewise positioned at the opposite ends of the add-on ballast 22. The further coupling means 26 in the basis ballast 20 is the protrusion 28 of the add-on ballast 22 i.e. the protrusion 28 of the add-on ballast 22 also has the shape of half a truncated pyramid having four sides and the protrusions 28 of the add-on ballast 22 are likewise positioned at the opposite ends of the add-on ballast 22. A detailed perspective view of one of the pre-formed ballasts 20, 22, i.e. the basis 20 and add-on 22 pre-formed ballasts is shown in figure 3. The pre-formed ballasts 20, 22 are pre-casted concrete blocks The pre-formed ballasts 20, 22 have the shape of curved beams. This enables the pre-formed ballasts 20, 22 to be positioned in a circular ring shape. Each pre-formed ballast 20, 22 spans over an arc substantially equal to 360° divided by the number of feet 9 of the supporting structure 2 i.e. an arc of 60°. The number of separate basis pre-formed ballasts 20 is equal to the number of feet i.e. six. Additionally, add-on ballast 22 are provided on top of the basis pre-formed ballasts 20.

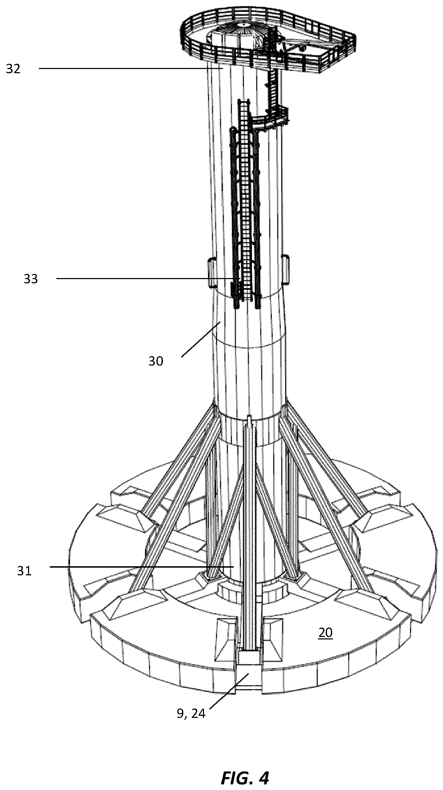

Figure 4 shows the perspective view of the supporting structure 2 and the pre-formed ballasts 20, 24 of figure 2 wherein the basis pre-formed ballasts 20 are positioned on top of the feet 9 and wherein no add-on pre-formed ballasts 22 are positioned on top of the basis pre-formed ballast 20, and wherein a support pile 30 extending along an elongation direction between a bottom end 31 and a top end 32 has been inserted in the supporting structure 2. The figure also shows the third step in an exemplary method for installing an offshore wind farm foundation 1 according to the present invention. The third step follows the second step described above and comprises inserting a support pile 30 into the supporting structure 2. The support pile 30 is a unitary pile, i.e. made out of a single piece, i.e. not comprising a separate bottom part such as a monopile that is joined to a separate top part such as a transition piece. The bottom end 31 of the support pile 30 rests on the supporting structure 2 i.e. the bottom end 31 of the support pile 30 is not inserted in the seabed. In particular, the bottom end 31 of the support pile 30 is supported by the lower ring 16 of the supporting structure 2, more in particular, the bottom end 31 of the support pile 30 is supported by the pile support 18 in the lower ring 16. The top end 32 of the support pile 30 is configured to directly receive a wind farm construction (not shown) such as a wind turbine, a substation or a meteorological mast i.e. as opposed to the top end 32 of the support pile 30 being configured to receive a transition piece configured to receive the wind farm construction. Secondary steel such as a ladder 33 is provided immediately on the support pile 30 and does not require a separate installation action. The ladder 33 reaches down from the upper end 32 of the support pile 30 to the water level at low tide.

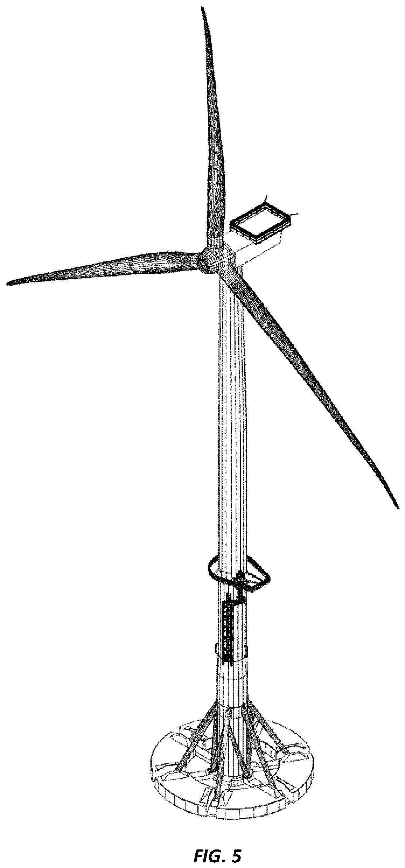

Figure 5 shows an offshore wind farm foundation 1 according to an embodiment of the present invention, for example the offshore wind farm foundation 1 of figure 4, wherein a wind turbine is supported on the offshore wind farm foundation 1.

## Claims

1. An installed offshore wind farm foundation (1) comprising a supporting structure (2) comprising an upper ring (4) defining an axial, radial and circumferential direction, the upper ring (4) being dimensioned such as to enable the insertion of a support pile (30) extending along an elongation direction between a bottom end (31) and a top end (32) throughout the upper ring (4) upon aligning the elongation direction of the support pile (30) with the axial direction, the support pile (30) extending throughout the upper ring (4), the supporting structure (2) further comprising a set of feet (9) configured to rest on a seabed (3), wherein the upper ring (4) is connected with the feet (9) such that the feet (9) are positioned radially outward from the upper ring (4) and axially below the upper ring (4) and such that each foot (9) is provided at a different position along the circumferential direction than its neighbouring feet (9), and wherein the supporting structure (2) further comprises a lower ring (16) positioned axially below the upper ring (4), wherein the axial centroid axis of the lower ring (16) is collinear with the axial centroid axis of the upper ring (4), wherein the lower ring (16) is connected with the feet (9) such that the feet (9) are positioned radially outward from the lower ring (16), wherein pre-formed ballasts (20), referred to as basis ballasts, are placed on top of the supporting structure (2) at a predetermined attachment location (24), wherein further pre-formed ballasts (22), referred to as add-on ballasts, are placed on top of the basis ballasts (20).

2. The installed offshore wind farm foundation (1) according to claim 1 wherein the basis ballasts (20) have coupling means (25, 26, 28) for coupling the basis ballast to the attachment location (24) of the supporting structure (2).

3. The installed offshore wind farm foundation (1) according to the preceding claim wherein the coupling means (25) of the basis ballasts comprises a cut-out (25) in each basis ballast (20), wherein the cut-out (25) preferably has a complementary shape to the shape of the supporting structure (2) at the attachment location (24).

4. The installed offshore wind farm foundation (1) according to the preceding claim wherein the attachment location (24) of the supporting structure (2) are the feet (9) of the supporting structure (2), and wherein the cut-out (25) has a complementary shape to the shape of the foot (9).

5. The installed offshore wind farm foundation (1) according to any one of the preceding claims 2 - 4 wherein the basis ballasts (20) comprise further coupling means (26), in particular a protrusion, for coupling with the add-on ballasts (22).

6. The installed offshore wind farm foundation (1) according to the preceding claim wherein the add-on ballasts (22) comprise coupling means, in particular a groove (27), complementary to the further coupling means (26) of the basis ballasts (20) enabling the coupling of the add-on ballast (22) and the basis ballast (20).

7. The installed offshore wind farm foundation (1) according to the preceding claim wherein the add-on ballasts (22) and the basis ballasts (20) have the same shape and are preferably made of the same material, and wherein the cut-out (25) in the basis ballast (20) is the groove (27) of the add-on ballast (22).

8. The installed offshore wind farm foundation (1) according to any one of the preceding claims, wherein the lower ring (16) comprises a primary ring (29) and a pile support (18) flanging radially inward of the primary ring (29), wherein the primary ring (29) is dimensioned such as to enable the insertion of the support pile (30) through the primary ring (29) up to abutment of the bottom end (31) of the support pile (30) with the pile support (18) upon aligning the elongation direction of the support pile (30) with the axial direction.

9. The installed offshore wind farm foundation (1) according to any of the preceding claims, wherein the bottom end (31) of the support pile (30) is supported by the lower ring (16) of the supporting structure (2).

10. The installed offshore wind farm foundation (1) according to any one of the preceding claims, wherein at least two separate basis ballasts (20) are placed on top of the supporting structure (2) at the attachment location (24).

11. The installed offshore wind farm foundation (1) according to any one of the preceding claims, wherein the attachment location (24) of the supporting structure (2) are the feet (9) of the supporting structure (2).

12. An installed offshore wind farm construction (1) such as a wind turbine comprising the installed offshore wind-turbine foundation according to any one of the preceding claims-, wherein the offshore wind turbine foundation supports the wind farm construction such as the wind turbine.

13. Method for installing an offshore wind farm foundation (1) according to any one of the preceding claims, the method comprising the steps of
a) providing a kit of parts- for assembling into the installed offshore wind farm foundation (1) according to any one of the preceding claims, the kit of parts comprising the supporting structure (2), the support pile (30), the pre-formed ballasts (20, 22),
b) shipping the supporting structure (2) towards a placement location,
c) shipping the pre-formed ballasts (20, 22) towards the placement location,
d) shipping the support pile (30) towards the placement location,
e) placing the supporting structure (2) onto the seabed (3),
f) placing the pre-formed ballasts (20), referred to as basis ballasts, on top of the feet (9) of the supporting structure (2) and placing further pre-formed ballasts (22), referred to as add-on ballasts, on top of the basis ballasts (20),
g) inserting the support pile (30) throughout the upper ring (4) and towards the seabed (3).

## Patentansprüche

1. Ein installiertes Offshore-Windparkfundament (1), das eine tragende Struktur (2) umfasst, welche einen oberen Ring (4) umfasst, der eine axiale, radiale und Umfangsrichtung definiert, wobei der obere Ring (4) so dimensioniert ist, dass die Einführung eines Stützpfahls (30) möglich ist, welcher sich entlang einer Ausdehnungsrichtung zwischen einem unteren Ende (31) und einem oberen Ende (32) durch den oberen Ring (4) erstreckt, wenn die Ausdehnungsrichtung des Stützpfahls (30) mit der axialen Richtung ausgerichtet wird, wobei sich der Stützpfahl (30) durch den oberen Ring (4) erstreckt, wobei die tragende Struktur (2) ferner einen Satz von Füßen (9) umfasst, die konfiguriert sind um auf einem Meeresboden (3) zu ruhen, wobei der obere Ring (4) so mit den Füßen (9) verbunden ist, dass die Füße (9) radial nach außen vom oberen Ring (4) und axial unter dem oberen Ring (4) positioniert sind und so, dass jeder Fuß (9) an einer anderen Position entlang der Umfangsrichtung als sein benachbarter Fuß (9) bereitgestellt ist, und wobei die tragende Struktur (2) ferner einen unteren Ring (16) umfasst, positioniert axial unter dem oberen Ring (4), wobei die axiale Schwerpunktachse des unteren Ringes (16) kollinear mit der axialen Schwerpunktachse des oberen Ringes (4) ist, wobei der untere Ring (16) so mit den Füßen (9) verbunden ist, dass die Füße (9) radial nach außen vom unteren Ring (16) positioniert sind, wobei vorgeformte Ballastelemente (20), als Basisballastelemente bezeichnet, an einer vorgegebenen Befestigungsstelle (24) auf der tragenden Struktur (20) platziert sind, wobei weitere vorgeformte Ballastelemente (22), als Zusatzballastelemente bezeichnet, auf den Basisballastelementen platziert sind.

2. Das installierte Offshore-Windparkfundament (1) nach Anspruch 1, wobei die Basisballastelemente (20) Kopplungsmittel (25, 26, 28) haben, um das Basisballastelement an die Befestigungsstelle (24) der tragenden Struktur (2) zu koppeln.

3. Das installierte Offshore-Windparkfundament (1) nach dem vorigen Anspruch, wobei das Kopplungsmittel (25) der Basisballastelemente eine Aussparung (25) in jedem Basisballastelement (20) umfasst, wobei die Aussparung (25) bevorzugt eine komplementäre Form zur Form der tragenden Struktur (2) an der Befestigungsstelle (24) hat.

4. Das installierte Offshore-Windparkfundament (1) nach dem vorigen Anspruch, wobei die Befestigungsstelle (24) der tragenden Struktur (2) die Füße (9) der tragenden Struktur (2) sind, und wobei die Aussparung (25) eine komplementäre Form zur Form des Fußes (9) hat.

5. Das installierte Offshore-Windparkfundament (1) nach irgendeinem der vorigen Ansprüche 2 bis 4, wobei die Basisballastelemente (20) weitere Kopplungsmittel (26) umfassen, insbesondere einen Vorsprung, um die Zusatzballastelemente (22) zu koppeln.

6. Das installierte Offshore-Windparkfundament (1) nach dem vorigen Anspruch, wobei die Zusatzballastelemente (22) Kopplungsmittel umfassen, insbesondere eine Nut (27), komplementär zu den weiteren Kopplungsmitteln (26) der Basisballastelemente (20), die das Koppeln der Zusatzballastelemente (22) und des Basisballastelements (20) ermöglichen.

7. Das installierte Offshore-Windparkfundament (1) nach dem vorigen Anspruch, wobei die Zusatzballastelemente (22) und die Basisballastelemente (20) dieselbe Form haben und bevorzugt aus demselben Material hergestellt sind, und wobei die Aussparung (25) im Basisballastelement (20) die Nut (27) des Zusatzballastelements (22) ist.

8. Das installierte Offshore-Windparkfundament (1) nach irgendeinem der vorigen Ansprüche, wobei der untere Ring (16) einen primären Ring (29) und eine Pfahlauflage (18) umfasst, die radial vom primären Ring (29) nach innen angeflanscht ist, wobei der primäre Ring (29) so dimensioniert ist, dass die Einführung des Stützpfahls (30) durch den primären Ring (29) bis zum Anschlag des unteren Endes (31) des Stützpfahls (30) mit der Pfahlauflage (18) möglich ist, wenn die Ausdehnungsrichtung des Stützpfahls (30) mit der axialen Richtung ausgerichtet wird.

9. Das installierte Offshore-Windparkfundament (1) nach irgendeinem der vorigen Ansprüche, wobei das untere Ende (31) des Stützpfahls (30) durch den unteren Ring (16) der tragenden Struktur (2) gestützt wird.

10. Das installierte Offshore-Windparkfundament (1) nach irgendeinem der vorigen Ansprüche, wobei mindestens zwei gesonderte Basisballastelemente (20) an der Befestigungsstelle (24) auf der tragenden Struktur (2) platziert sind.

11. Das installierte Offshore-Windparkfundament (1) nach irgendeinem der vorigen Ansprüche, wobei die Befestigungsstelle (24) der tragenden Struktur (2) die Füße (9) der tragenden Struktur (2) sind.

12. Eine installierte Offshore-Windparkkonstruktion (1) wie eine Windturbine, welche das installierte Offshore-Windparkfundament nach irgendeinem der vorigen Ansprüche umfasst, wobei das Offshore-Windparkfundament die Windparkkonstruktion wie die Windturbine trägt.

13. Verfahren zum Installieren eines Offshore-Windparkfundaments (1) nach irgendeinem der vorigen Ansprüche, wobei das Verfahren die folgenden Schritte umfasst:
a) Bereitstellen eines Satzes von Teilen zum Zusammenbau in das installierte Offshore-Windparkfundament (1) nach irgendeinem der vorigen Ansprüche, wobei der Satz von Teilen die tragende Struktur (2), den Stützpfahl (30), die vorgeformten Ballastelemente (20, 22) umfasst,
b) Transportieren der tragenden Struktur (2) an eine Platzierungsstelle,
c) Transportieren der vorgeformten Ballastelemente (20, 22) an die Platzierungsstelle,
d) Transportieren des Stützpfahls (30) an die Platzierungsstelle,
e) Platzieren der tragenden Struktur (2) auf den Meeresboden (3),
f) Platzieren der vorgeformten Ballastelemente (20), als Basisballastelemente bezeichnet, auf die Füße (9) der tragenden Struktur (2) und Platzieren der weiteren vorgeformten Ballastelemente (22), als Zusatzballastelemente bezeichnet, auf die Basisballastelemente (20),
g) Einführen des Stützpfahls (30) durch den oberen Ring (4) und zum Meeresboden (3).

## Revendications

1. Fondation pour parc éolien offshore installée (1) comprenant une structure de support (2) comprenant un anneau supérieur (4) définissant une direction axiale, radiale et circonférentielle, l'anneau supérieur (4) étant dimensionné de manière à permettre l'insertion d'un pilier de support (30) s'étendant le long d'une direction d'allongement entre une extrémité du bas (31) et une extrémité du haut (32) à travers l'anneau supérieur (4) lors de l'alignement de la direction d'allongement du pilier de support (30) sur la direction axiale, le pilier de support (30) s'étendant à travers l'anneau supérieur (4), la structure de support (2) comprenant en outre un ensemble de pieds (9) configurés pour reposer sur un fond marin (3), dans laquelle l'anneau supérieur (4) est relié aux pieds (9) de telle sorte que les pieds (9) soient positionnés radialement vers l'extérieur par rapport à l'anneau supérieur (4) et axialement en dessous de l'anneau supérieur (4) et de telle sorte que chaque pied (9) soit prévu à une position différente le long de la direction circonférentielle de celle de ses pieds (9) voisins, et dans laquelle la structure de support (2) comprend en outre un anneau inférieur (16) positionné axialement en dessous de l'anneau supérieur (4), dans laquelle l'axe de centroïde axial de l'anneau inférieur (16) est colinéaire avec l'axe de centroïde axial de l'anneau supérieur (4), dans laquelle l'anneau inférieur (16) est relié aux pieds (9) de telle sorte que les pieds (9) soient positionnés radialement vers l'extérieur par rapport à l'anneau inférieur (16), dans laquelle des ballasts préformés (20), appelés ballasts de base, sont placés sur le dessus de la structure de support (2) à un emplacement de fixation prédéterminé (24), dans laquelle des ballasts préformés supplémentaires (22), appelés ballasts additionnels, sont placés sur le dessus des ballasts de base (20).

2. Fondation pour parc éolien offshore installée (1) selon la revendication 1 dans laquelle les ballasts de base (20) présentent un moyen de couplage (25, 26, 28) pour coupler le ballast de base à l'emplacement de fixation (24) de la structure de support (2).

3. Fondation pour parc éolien offshore installée (1) selon la revendication précédente dans laquelle le moyen de couplage (25) des ballasts de base comprend une découpe (25) dans chaque ballast de base (20), dans laquelle la découpe (25) présente de préférence une forme complémentaire de la forme de la structure de support (2) à l'emplacement de fixation (24).

4. Fondation pour parc éolien offshore installée (1) selon la revendication précédente dans laquelle l'emplacement de fixation (24) de la structure de support (2) est les pieds (9) de la structure de support (2), et dans laquelle la découpe (25) présente une forme complémentaire de la forme du pied (9).

5. Fondation pour parc éolien offshore installée (1) selon l'une quelconque des revendications précédentes 2-4 dans laquelle les ballasts de base (20) comprennent un moyen de couplage supplémentaire (26), en particulier une saillie, pour le couplage aux ballasts additionnels (22).

6. Fondation pour parc éolien offshore installée (1) selon la revendication précédente dans laquelle les ballasts additionnels (22) comprennent un moyen de couplage, en particulier une rainure (27), complémentaire du moyen de couplage supplémentaire (26) des ballasts de base (20) permettant le couplage du ballast additionnel (22) et du ballast de base (20).

7. Fondation pour parc éolien offshore installée (1) selon la revendication précédente dans laquelle les ballasts additionnels (22) et les ballasts de base (20) présentent la même forme et sont de préférence faits du même matériau, et dans laquelle la découpe (25) dans le ballast de base (20) est la rainure (27) du ballast additionnel (22).

8. Fondation pour parc éolien offshore installée (1) selon l'une quelconque des revendications précédentes, dans laquelle l'anneau inférieur (16) comprend un anneau principal (29) et un support de pilier (18) bordant radialement vers l'intérieur l'anneau principal (29), dans laquelle l'anneau principal (29) est dimensionné de manière à permettre l'insertion du pilier de support (30) à travers l'anneau principal (29) jusqu'à la butée de l'extrémité du bas (31) du pilier de support (30) avec le support de pilier (18) lors de l'alignement de la direction d'allongement du pilier de support (30) sur la direction axiale.

9. Fondation pour parc éolien offshore installée (1) selon l'une quelconque des revendications précédentes, dans laquelle l'extrémité du bas (31) du pilier de support (30) est supportée par l'anneau inférieur (16) de la structure de support (2).

10. Fondation pour parc éolien offshore installée (1) selon l'une quelconque des revendications précédentes, dans laquelle au moins deux ballasts de base (20) distincts sont placés sur le dessus de la structure de support (2) à l'emplacement de fixation (24).

11. Fondation pour parc éolien offshore installée (1) selon l'une quelconque des revendications précédentes, dans laquelle l'emplacement de fixation (24) de la structure de support (2) est les pieds (9) de la structure de support (2).

12. Construction pour parc éolien offshore installée (1) telle qu'une éolienne comprenant la fondation pour éolienne offshore installée selon l'une quelconque des revendications précédentes, dans laquelle la fondation pour éolienne offshore supporte la construction pour parc éolien telle que l'éolienne.

13. Procédé d'installation d'une fondation pour parc éolien offshore (1) selon l'une quelconque des revendications précédentes, le procédé comprenant les étapes de
a) fourniture d'un kit de pièces - pour l'assemblage dans la fondation pour parc éolien offshore installée (1) selon l'une quelconque des revendications précédentes, le kit de pièces comprenant la structure de support (2), le pilier de support (30), les ballasts préformés (20, 22),
b) expédition de la structure de support (2) vers un emplacement de mise en place,
c) expédition des ballasts préformés (20, 22) vers l'emplacement de mise en place,
d) expédition du pilier de support (30) vers l'emplacement de mise en place,
e) placement de la structure de support (2) sur le fond marin (3),
f) placement des ballasts préformés (20), appelés ballasts de base, sur le dessus des pieds (9) de la structure de support (2) et placement des ballasts préformés supplémentaires (22), appelés ballasts additionnels, sur le dessus des ballasts de base (20),
g) insertion du pilier de support (30) à travers l'anneau supérieur (4) et vers le fond marin (3).
